# EUROPEAN PATENT APPLICATION

(11) **EP 1 712 582 A1**
(43) Date of publication of application: **18.10.2006**
(21) Application number: 06110438.6
(22) Date of filing: 28.01.2003
(51) Int. Cl.: C08G 77/32

(54) **Methods of treating polymeric substances**

(30) Priority: 18.02.2002 DK 200200242
(62) Divisional of application: 03702368.6
(71) Applicant: Nanon A/S, 2605 Bröndby (DK)
(72) Inventor: Karthäuser, Joachim, S-192 51, Sollentuna (SE)
(74) Representative: Hegner, Anette

(57) **Abstract**

The invention relates to a method for modifying a surface of injection-moulded, extruded or pressed polymeric switch cap comprising silicone rubbers. The method comprises the steps of removing and/or extracting liquid low molecular weight residues partly or totally from the substrate, and subjecting the substrate to a surface treatment, e.g. flame, corona, and plasma-treatment. An excellent activation of the surface for painting is achieved.

## Description

### Backgground of the invention

The present invention relates to a method of treating a polymeric substrate containing silicon oil residues. In one aspect of the invention relates to a method of modifying the surface of the polymeric substrate. In another aspect the invention relates to a method of incorporating a material into the substrate.

Liquid silicone rubber (LSR) is typically produced by mixing two silicone components. One component contains a catalyst, and the other component contains a co-catalyst or cross-linker. Both components are stable as such and typically mainly comprise vinyl-terminated polydimethylsiloxanes. The silicone oil components are subjected to high pressure and temperature in an extrusion apparatus, e.g. for manufacture of tubes, or in an injection moulding machine. Typical examples of commercially available LSR grades are Wacker's Elastosil family and GE Bayer Silicones Silopren family. Many other types of silicone rubbers are available, such as those which are cross-linked by e.g. peroxides, or silicone rubbers with other chemical groups than methyl attached to the silicon atoms, e.g. ethyl or phenyl or trifluoromethyl. The term "silcione rubber" is used to denote all types of silicone rubbers.

Today silicone rubbers are used in many types of applications. In some of the applications it is desired to modify the silicone rubber e.g. by modifying the surface, such as painting or adhering to the surface, or by incorporating e.g. pigments and other substances into the material.

According to prior art methods e.g. as described in US 5,338,574 it is highly complicated to provide a stable modification of the surface of silicon rubber which then may provide improved adhering of a paint to surfaces thereof. The incorporating of materials e.g. pigments to provide a homogenous distribution of colour has been equally difficult, and furthermore, the method of incorporating such materials has been very difficult.

In many technical applications such as caps for switches, e.g. in the automotive sector, telephone keypads, computer keypads, displays, etc., LSR items are subjected to a surface treatment. The surface may be subjected to plasma at reduced pressure (i.e. below 1 bar), atmospheric plasma, and/or corona or flame treatment, in order to improve or enhance the adhesion of LSR items to another material e.g. polyurethane. However, it has been found that the coating has a very short life time.

The object of the invention is to provide a novel method of modifying the surface of a polymeric substrate containing silicone rubber, wherein the resulting modification e.g. painting has a longer lifetime than prior art methods.

Another object of the invention is to provide a simple method of incorporating materials e.g. pigments into silicon containing materials.

### Disclosure of the invention

These and other objects as will be clear from the following have been solved by the invention as defined in the claims.

In the course of the work which led to the present invention, it has surprisingly been found that the efficiency and quality of surface activation processes which are carried out in order to enable secondary processes such as coating or painting with non-silicone materials is related to residues (silicon oil residues). The presence of a film of low molecular weight residues on the surface of an item means that the coating obtained by a subsequent process adheres to the residue film - instead of adhering to the surface of the main polymer as desired. As a consequence, the adhesion of a secondary coating, e.g. paint or electrically conducting polymers, is weak because the adhesion of the residue film to silicone is the weakest link in the adhesive joint. The invention provides a solution to the problem that items made from silicon rubber and in particular LSR contain residues of low molecular weight silicone oils, even if they are fully tempered, after-vulcanised or post-reacted. These residues can diffuse through the silicone substrate, e.g. made by injection moulding or extrusion, and form a film on the surface of the substrate.

Items of LSR and other silicon rubbers are most often polymerised to a degree of about 92-96%. Therefore, about 4-8% silicon oil residues also referred to herein as "residues", remains in the items in the form of low-molecular weight compounds from the class of polydimethylsiloxanes. Common examples of such compounds are: hexamethylcyclotrisiloxane, abbreviated D3, octamethylcyclotetrasiloxane, abbreviated D4, and similar cyclic, linear or branched oligomers of silicone character and varying molecular weight.

For other types of silicone rubbers, the residues will obviously have different chemical compositions.

Some of the low molecular weight compounds are chemically inert, others exhibit chemical reactivity, e.g. because of a certain degree of vinyl functionalisation.

Certain silicon rubber items, in particular LSR, which are used in medical applications are subjected to a post-reaction or a vulcanisation, also referred to as curing, in order to reduce the amount of silicon oil residues. The LSR articles are thus subjected to heat treatment under air or oxygen flow. As result, it was found that the content of residues may be reduced e.g. from 2-8% to some 1.5-4%. In this curing process, some of the chemically active species may add to high-molecular weight polymer (silicone) chains, other, chemically inert species, e.g. cyclic siloxanes, or may be driven out of the items and evaporate. Still, curing processes do far from remove all residues, even if the curing process is carried out until no further weight loss occurs. One reason may be, without wishing to be bound by these and other hypothesis, that the temperature applied in prior art process is too low to evaporate certain silicone species. Although certain processes in the production and vulcanisation of prior art silicon rubber has led to some removal of low molecular weight silicone oil from the silicone rubber, there still remain problems with the surface properties of the silicone rubber items with regard to adhesion and surface activation, especially in applications where a long lifetime, high quality and chemical resistance are the target.

According to the invention at least a part of the silicon oil residues from the polymer substrate is extracted, and thereafter the substrate is subjected to a surface treatment. It has unexpectedly been found that this method results in highly improved surface properties of the treated polymer item with regard to adhesion and surface activation e.g. for adhesion to another material.

In a first aspect of the invention it relates to a method of modifying the surface of a polymeric substrate comprising one or more silicon oil residues. The method comprises the steps of:
i) extracting at least a part of the silicon oil residues; and
ii) subjecting said substrate to a surface treatment, e.g. a deposition treatment,

The term "polymeric substrate" comprising silicone oil residues" encompasses all sorts of polymer silicone rubbers that contain liquid residues substantially consisting of low molecular weight compounds (compounds with molar weights ranging from ca. 70 up to 3000 and higher, representing, a.o. D3, D4, D5 a.s.f. and other cyclic or non-cyclic siloxanes). The polymeric substrate may e.g. be injection-moulded, extruded or pressed prior to the modification of its surface. In one embodiment the polymer substrate is an LSR substrate. In this embodiment a very high improvement with respect to ability to be able to adhere to the LSR substrate is achieved.

As described above, silicon rubbers may be subjected to a curing which typically is carried out after injection moulding or extrusion. While using the present invention, it has been found that this curing step can be omitted, or that its severity can be reduced. LSR grades containing adhesion promoters will typically require some post-curing in order to achieve the desired adhesion levels to polar plastics. In general, however, reduction of curing severity has the potential to improve the general surface quality, in particular with respect to the formation of small particles such as silicon dioxide and other thermal or oxidative decomposition products of silicone rubber.

The use of the substrate may e.g. be for components in telephones, computers etc, and in general where polymer surfaces with excellent properties are required. The term "extracting" includes any type of removal of the residues from the polymeric material. The extracting of the liquid in step i) may involve various techniques including vacuum treatment and washing or washing or extracting, e.g. with fluids in supercritical state. These treatments are described in more details below.

In one embodiment at least a part of e.g. 50 % such as 70 %, such as 90 % of the silicon oil residues having a molar weight up to about 3000, such as up to 1000, such as between 100 and 500 is extracted during the extraction step i).

In one embodiment at least a part of e.g. 50 % such as 70 %, such as 90 % of the silicon oil residues having a vapour pressure of 1 µbar or more at 1 atm. and 100 °C is extracted during the extraction step i).

In one embodiment the amount of silicon oil residues removed during step i) is at least 0.1 % by weight of the substrate, such as at least 0.5 % by weight of the substrate, such as at least 1.0 % by weight of the substrate, such as at least 2.0 % by weight of the substrate.

The treatment according to step i) may further result in removal of other volatile substances which, unless removed, would negatively interfere with in particular plasma and CVD processes, or would lead to reactor fouling. Thus, in one embodiment it may also be desired to remove water during step i).

The surface treatment in step ii) may include many well-known surface treatments like e.g. flame, corona, and plasma-treatment. Step ii) may be performed immediate after step i) within minutes or hours. In one embodiment step ii) is performed within 24 hours after step i) to thereby obtain very high effect of combining the steps i) and ii). In another embodiment, step ii) may be performed weeks or even months after step i) and a good surface activation may still be obtained. According to the invention the novel and surprising effect of excellent surface activation is achieved by the combination of the treatments according to step i) and ii).

The treatment according to the method of the invention does in general not have any significant negative effect on mechanical properties.

In one embodiment step i) comprises a vacuum treatment of the substrate. The vacuum treatment is preferably carried out in a vacuum reactor until a constant pressure of 10 mbar or less is reached, more preferably until a constant pressure of 10 microbar (µbar) or less is reached. The vacuum treatment may e.g. be combined with other residue extracting steps.

In one embodiment step i) comprises a heat treatment of the substrate, said heat treatment preferably being carried out for at least 0.3 hours, such as for 1-2 hours, such as for 1-3 hours at a temperature above 100°C, such as about 130°C or higher, such as between 150-200°C, wherein said heat treatment e.g. may be carried out under air flow.

It has been found that prolonged heat treatment prior to plasma treatment is advantageous compared to vacuum treatment. It may be speculated that vacuum treatment and in particular the mechanical compression of silicone items upon pressurising the vacuum chamber, squeezes out silicone oils which remain at the surface for some time. This way any further surface treatment would occur partly on a liquid substrate rather than on the polymer itself. In order to remove this "film" of oil, a vacuum treatment in step i) may preferably be combined with another treatment e.g. heat treatment or solvent treatment. When using heat treatment as a means for extracting silicon oil residues the surface treatment of step ii) may in one embodiment be performed within 24 hours after termination of the heat treatment extraction.

In one embodiment, step i) comprises extraction of residues by use of solvents selected from the group consisting of water containing surfactant, such as water with a surface tension of 70 dyn/cm or less, e.g. 50 dyn/cm, e.g. 20 dyn/cm; microemulsions; and organic solvents such as acetone and methylethylketone. The selected solvent or solvents should preferably be selected so that is possess a good compatibility with the residues, in order to extract them from the substrate. However, the skilled person will be able to select the optimum solvent for extraction of a specific polymer substrate as a matter of routine or as a result of routine experiments.

In one embodiment a solvent comprising or consisting of CO₂ is used for the extraction.

In one embodiment step (i) comprises extraction of residues using one or more gas, preferably selected from the group consisting of CO₂ and mixtures of CO₂ with one or more gases selected from the group consisting of paraffins and oxygenates, more preferably selected from the group consisting of butane, pentane, methanol and acetone. The term "gas" refers to its state during the extraction.

In one embodiment step (i) comprises extraction of residues using one or more supercritical solvent in its supercritical state during at least a part of the extraction step, said supercritical solvent preferably comprises one or more compounds from the group of C₁-C₁₂ hydrocarbons, preferably C₃-C₄ hydrocarbons, more preferably selected from the group consisting of propane, propene, isobutane, butane, butene, isobutene, methanol, acetone and CO₂, more preferably the supercritical solvent comprises CO₂.

In one embodiment the extraction using gas and the extraction using supercritical solvent is combined so that the solvent is very close to it supercritical state, but still remain to be a gas. The preferred solvent in this embodiment is CO₂, but any one of the above-mentioned gas/supercritical solvents may be used separately or in combination.

In one embodiment the extraction using gas, the extraction using supercritical solvent, and extraction using liquid is combined so that the solvent during the extraction converts from one of its 3 states, gas, liquid, supercritical, to another one of its states. The preferred solvent in this embodiment is CO₂, but any one of the above-mentioned gas/supercritical solvents may be used separately or in combination. In one embodiment the solvent in the form of CO₂, or a combination of at least 50 % by weight of CO₂ and another solvent is during the extraction step partly in the form of gas and partly in the form of liquid.

Prior art regarding extraction with supercritical carbon dioxide describes the removal of residues from silicon rubbers used in medical articles, especially in implants (Val Krukonis et. al., May 1988, "Supercritical fluids: their proliferation in the Pharma Industry", European Pharmaceutical Contractor. Removal of low grade silicon oil from moulded items of silicon rubber is disclosed in e.g. EP 0,570,010 A1 and US 4,188,423.

At present stage supercritical extraction is a well-known and widely used technique and the determination of the specific conditions required for extracting on a specific polymer substrate is well within the skill in the art.

Table 1 lists some suitable and convenient solvents for the supercritical extraction. Further information concerning supercritical extraction and methods of carrying it out may be found in "Solubility parameters of organic compounds", Handbook of Chemistry and Physics, 62^{nd} ed., 1981-1982, CRC press, pages C699 pp; and in "Critical temperatures and pressures", Handbook of Chemistry and Physics, 62^{nd} ed., 1981-1982, CRC press, pages F76 pp.; and in US 6,251,267, which are hereby incorporated by reference.

The supercritical solvent or solvents may preferably be a hydrocarbon with a Hildebrand solubility of below 9, preferably 7 or less (see e.g. "Solubility Parameters: Theory and Application", John Burke, The Oakland Museum of California. August 1984.

Hydrocarbons are in general preferred, such as C₁-C₁₂ hydrocarbon, preferably a C₃-C₄ hydrocarbon, more preferably selected from the group consisting of propane, propene, isobutane, butane, butene, isobutene.

**Table 1**

| Solvent | Tc / deg C | Pc / bar | Hildebrand solubility parameter |
|---|---|---|---|
| Methane | -82 | 45 | 5.4 |
| Methane, monochloro-difluoro, CHClF2 | 96 | 49 | |
| Ethane | 32 | 48 | 6.0 |
| Ethane, monofluoro | 102 | 50 | |
| Ethylene | 10 | 51 | 6.1 |
| Acetylene | 36 | 62 | |
| Propane | 97 | 42 | 6.4 |
| Propene | 92 | 45 | 6.5 |
| Propyne | 128 | 53 | |
| Allene (propadiene) | 120 | 44 | |
| Butane | 152 | 38 | 6.8 |
| Iso-butane | 135 | 36 | |
| n-butene | 146 | 40 | |
| 2-butene | 155-160 | 40-42 | |
| Isobutene | | | |
| Butadiene (1,2; 1,3) | 152-171 | 42-44 | |
| Pentane | 197 | 33 | 7.0 |
| Iso-pentane | 188 | 33 | |
| Neo-pentane (=2,2 diMe-propane | 161 | 32 | |
| Pentene | 191 | 40 | 6.9 |
| Carbon dioxide | 31 | 73 | |

It should be understood that silicon oil residues may migrate in the substrate material, which means that large amounts of silicon oils are still present in the substrate material near its surface, this silicon oil residues may migrate to the surface and result in weakening of the surface activation and applied material may flake of.

For some embodiments according to the invention it is preferred that the substrate is subjected to an intermediate primer deposition step after, overlapping with or simultaneously with step i). The primer deposition comprises deposition of a material, which deposition may comprise the precipitation of a deposition material both onto the surface area of the substrate, but also into the bulk of the substrate. Preferably the deposition material is selected from the group of materials that are chemically or physically at least partly compatible to materials, which are used in subsequent surface coating or similar processes. Preferably the deposition material is deposited simultaneously with or subsequent to the extracting of residues from the substrate. The depositing material may serve to build in desired properties in the surface of the substrate, e.g. allowing better surface activation and/or enhancing adhesive properties to coating materials or paints applied in a subsequent step.

In one embodiment the intermediate primer deposition step is carried out using a solvent carrying a dispersed or dissolved deposition material such as a dispersed or dissolved polymer. The dispersed or dissolved material is preferably selected from the group of PU (polyurethane prepolymers), acrylate, styrene, epoxy resins, glycols, polyethers or other polymers, resins, pigments and mixtures thereof. The solvent may e.g. further comprise surface-active compounds such as siloxanes coupled to polar chains such as represented by the class of alkyl-terminated PDMS-ethylene and propylene oxide surfactants. The siloxane chains may e.g. be siloxane with molecular weight in the range 500 - 10 000.

The above materials provide desirable properties for use in e.g. telephone and computer keyboards.

The solvent carrying a dispersed or dissolved deposition material may in one embodiment be applied to the surface and allowed to gradually evaporate thereby leading to deposition of the deposition material on the surface, but also within the porous or open structure of the substrate. In one embodiment it will be an additional advantage if the mechanical surface structure is prepared via injection moulding as a rough surface, which will provide a good basis for the adhesion of the depositing material onto the surface of the substrate (the term "rough surface" is to be understood as a surface containing unevenness, essentially as holes and tops and crater-like holes with a depth or height up to 0.1 mm and with a diameter up to 1 mm, moreover the surface may contain pores with a diameter up to 0.1 mm).

In one embodiment the intermediate primer deposition step is carried out at elevated gas pressure, with preparation and application of the dispersed or dissolved deposition material, and gradually lowering of pressure to afford precipitation of the materials onto and within the substrate, wherein the precipitation preferably being afforded by gradual evaporation of the solvent leading to deposition of the deposition material.

In one embodiment the intermediate primer deposition step is carried out in the presence of supercritical solvent in its supercritical state. In one embodiment the pressure and temperature is so that the solvent is so close to a transition between supercritical state, liquid and/or gas. preferably so close that a change of 25 °C or less, such as 10 °C or less, such as 5 °C or less, will result in a change of state of the solvent.

In one embodiment the intermediate primer deposition step is carried out using a combination of gas, liquid, and supercritical solvent as a carrier for the dispersed or dissolved deposition material. The conditions temperature and pressure may e.g. be selected so that the solvent is very close to it supercritical state. The preferred solvent in this embodiment is CO₂, but any one of the above-mentioned gas/supercritical solvents may be used separately or in combination.

In one embodiment the intermediate primer deposition step is carried out using a combination of gas, liquid and supercritical solvent as a carrier for the dispersed or dissolved deposition material. The conditions temperature and pressure are selected so that the solvent during the deposition converts from one of its 3 states, gas, liquid, supercritical, to another one of its states. The preferred solvent in this embodiment is CO₂, but any one of the above-mentioned gas/supercritical solvents may be used separately or in combination. In one embodiment the solvent in the form of CO₂, or a combination of at least 50 % by weight of CO₂ and another solvent is during the deposition step partly in the form of gas and partly in the form of liquid.

For the purpose of providing a uniform layer of depositing material on the surface of the substrate it is preferred that a gradual evaporation of the solvent or a gradual or partial pressure release in the treatment reactor leads to deposition of the polymer. A skilled person will by a few experiments be able to find the optimal gradual degree of evaporation for a particular substrate and solvent/deposition material.

In one embodiment the extraction process can easily be combined with a step of applying a primer and/or impregnation material whereby at the end of the extraction process a substance that is soluble in CO₂ at high pressure, but less soluble at reduced pressure is introduced in the high pressure extraction vessel whereupon the pressure is reduced such that said substance is precipitated in the silicone substrates. This process modification results in modified silicone surfaces which are more facile to activate, and in addition the colour of the substrate can be changed depending on the choice of the precipitated material, possibly obviating one or more painting steps and thereby reducing overall costs.

According to the invention the substrate in step (ii) may be treated e.g. using flame, corona or plasma or CVD / PVD surface treatment(s), or the substrate may be treated using chemicals in liquid stage, such as silane treatment or other treatments involving solution-borne primers such as epoxy resins. As liquid residues that may form a disturbing film on the surface of the substrate, have been removed, not only from the surface, but also at least from some of the substrate material close to the surface, the "true" surface of the substrate is exposed to be treated and an excellent surface activation is provided.

In an embodiment the surface treatment in step (ii) comprises deposition of material(s) onto the surface of the coating. The deposition may e.g. be provided using plasma or CVD / PVD surface treatment(s) e.g. as disclosed in WO 00235895.

In one embodiment the deposition of material(s) in step ii) is achieved as the intermediate primer deposition as it has been described above, and with the same preferences as above.

In a preferred embodiment of the method according to the invention the substrate is subjected to a coating process, advantageously subsequent to step (i) and (ii). The coating process is suitable application of one more paint layers, electrically conducting polymer layers, coatings for biochemical purposes, such as peptide docking sites for analytical and sensor applications, and biochemical reagents in "bio-chip" flow cell constructions. Thus the surface modified substrate according to the invention is applicable within a wide range of technical uses.

The substrate preferably comprises material selected from the group of silicone rubbers (RTV, HTV, press-moulded and injection moulded and extruded) with and without additive packages such as adhesion promoters for 2K-constructions (i.e. two-component items consisting of two plastic types, injection moulded in one machine) and fillers, plasticized thermoplastics and thermoplastics containing oil and other liquid components such as PVC, TPE, PU, and vulcanised rubbers.

The Invention also includes a method of modifying the surface of a polymeric substrate comprising one or more silicon oil residues, preferably as disclosed above, wherein the method comprises the steps of:
0) shaping the substrate by injection moulding, extruding or pressing;
i) extracting at least a part of the silicon oil residues; and
ii) subjecting the substrate to a surface treatment.

The extraction of silicon oil residues from the shaped substrate and the surface treatment may be performed in a combined process, which means that the extraction step and the surface treatment step is performed immediately after each other (or within a few minutes such as 10 minutes), or overlapping with each other e.g. in the same reaction chamber.

Thus the activation of the surface of the substrate may be achieved by the combination of the removal of liquid residues and a surface treatment as described above.

According to the invention it is in one embodiment desired that the extracted substrate is subjected to vacuum for removal of liquid residues, in particular water, preferable at a pressure around 1 - 100 µbar, prior to surface treatment. The vacuum lowers the vapour pressure required to evaporate the liquid residues from the substrate and thus facilitate the removal by evaporation of the liquid residues. Prolonged heat treatment at standard pressure, possibly in circulated air, is an alternative to the vacuum treatment.

In a second aspect the invention relates to a method of incorporating of a material into a polymeric substrate comprising one or more silicon oil residues, said method comprising the steps of:
i) extracting at least a part of the silicon oil residues; and
ii)subjecting said substrate to a deposition treatment,

The steps i) and ii) may be provided as described above, in particular where step ii) is or comprise a step of deposition including precipitation of a deposition material into the substrate. The deposition material may be as described above. In one embodiment the deposition material is pigment or styrene. Styrene provides the substrate with a white colour, whereas pigments e.g. may result in a translucent colour.

The substrate may e.g. be subjected to the deposition step simultaneously with or subsequent to the extracting of residues from the substrate.

In one embodiment the deposition step is carried out using a solvent carrying a dispersed or dissolved deposition material as also described above.

In particular any one of the deposition steps disclosed above for deposition f an intermediate primer may be used as the deposition treatment ii).

As it is apparent from the text and the examples, the need to extract residues to a certain level may vary from case to case. Similarly, the substrates subjected to the methods claimed may vary in chemical composition, geometry and application demands. For certain applications, such as medical devices, or objects used in contact with bodily fluids for periods longer than 1 hour, a high degree of extraction may be advantageous. For industrial applications, such as switches and keypads and the like, the removal of residues having boiling points between 60 and 300 °C may suffice to achieve the desired improvement of adhesion in a subsequent deposition or coating step.

Therefore, the best mode of applying the invention both in its first and its second aspect may vary from case to case. As an example, in mechanically stable parts pressure variations during the high pressure extraction using gases such as CO₂, such as between 200 and 350 bar, or between 20 and 50 bar, may assist the transport of gas through the polymer matrix, and therefore the removal of residues, without damaging the matrix.

More fragile parts, however, may favourably be extracted at lower temperatures and moderate pressures, say 10-50 °C and 10-100 bars.

Efficient deposition of materials may favourably be carried out making use of the pressure dependency of the solubility of said materials, i.e. using the pressure interval 30-300 bar.

Economic constraints may lead to extraction processes being favourably carried out at pressures below 50 bars, due to the costs of high pressure reactors; however, still making use of the low surface tension of e.g. CO₂ at said pressures below 50 bars.

The invention will now be further illustrated with reference to some examples.

### Examples:

### Example 1

This example refers to a process solution, which shows distinct advantages compared to standard surface activation (plasma, flame, corona etc.). Various silicone items (with and without adhesion promoters) were treated by method a) b) or c): a) no special treatment, b) vacuum treatment at ca. 10 µbar for 8 hours, c) heat treatment at ca. 130°C for 2 hours. Subsequently, the quality and durability of the surface coatings were compared (surface tension over time, also in accelerated ageing tests, absolute values, holding power etc.).

The standard 30-50 Shore A silicone items contained 2.3-2.9 % wt. oil, as measured by acetone Soxleth extraction. The silicone items containing adhesion promoters contained 1.9-2.7% silicone oil.

Results can be summarised as follows:
- no pre-treatment results in medium to good activation results, however, reactor fouling is observed, highly likely due to volatile silicones evaporating from silicone polymer and finally decomposing on the plasma electrodes. Certain "hidden" areas on silicone items, especially those on geometrically complex items, show lower activation levels, possibly due to gas evaporating and preventing chemical monomers (i.e. plasma reactants) from reaching the polymer phase.
- vacuum pre-treatment is an improvement compared to no pre-treatment at all. No or very little reactor fouling is observed, and the plasma coatings obtained are durable and stable for weeks and months. However, silicone oil contents above 2.6% for standard LSR and above 2.3% for LSR with adhesion promoter translate to reduced stability (lifetime) of the plasma activation. As evidence, after one week silicone oils can be detected using standard analytical tools such as FTIR on the plasma activated surfaces. For technical purposes where lifetimes in the order of at least 10 days are desirable, silicone items containing said levels of silicone oils can therefore not be processed using vacuum pre-treatment.
- Heat treatment turns out to be well suited for silicone items containing more than 2.3% of silicone oils. The durability of the coatings prepared on such items is normally in excess of 10 days. In addition, diffusion of silicone oils to the surface is slower by a factor of approx. 3-5 for heat-treated items as opposed to vacuum-treated items.

It should be noted that heated and evacuated items should be subjected to plasma or other surface treatment preferably within 24 hours, such as 4 hours after heating resp. evacuation, alternatively stored under exclusion of humidity. Reversible water uptake into silicone will otherwise proceed within 4-24 hours.

### Example 2

Injection moulded articles made of various two-component LSR grades (Wacker Elastosil grades, GE Bayer Silopren) were subjected to extraction with supercritical CO₂. In order to speed up the process, pressures of up to 350 bar and temperatures of up to 80°C were chosen whilst, in principle, pressures down to 35 bar and a temperature as low as around room temperature might have been chosen. Both autoclaves and flow reactors were used. Due to the high solubility of silicones in supercritical CO₂, the extraction proceeds quickly. The level of extractable silicones which in control experiments is determined by Soxleth acetone reflux extraction to be in the order of 2.5-4% weight, is reduced to < 0.2 up to 0.7% weight. The remaining liquid silicones are typically high in boiling point, i.e. > 400°C.

The substrates obtained were treated using vacuum-plasma and flame treatment. Quality parameters for surface treatment are, a.o., surface tension, lifetime of the surface coating, stability of the coating in accelerated ageing experiments, stability of the coating versus solvents, holding power of the coating in adhesion measurements. Further more indirect, but relevant tests are the stability of a further coating such as a paint.

It should be noted that certain plasma coatings on LSR (such as based on NKT patents WO 96/18756, WO 98/00457, WO 00/44207 and WO 02/35895) are already of high quality with respect to a.m. parameters. CO₂₋extracted silicone items surpass standard LSR. The lifetime of plasma coatings as well as of coatings prepared by flame treatments has so far been measured to be more than 3 months even at 80°C whilst in particular flame treatment of standard silicone has only a lifetime of hours or, at best, days even at room temperature. Holding power and surface tension levels are not changed with respect to standard oil-containing LSR, however, this has not been expected either as these parameters are determined by the chemical nature of the coating. However, the stability of said parameters in accelerated ageing was improved as described above.

### Example 3

LSR containing adhesion promoters is a fast growing grade due to its practical advantages, such as the possibility to injection-mould it onto thermoplastics like polyamide. This grade, however, is traditionally very difficult to plasma-coat due to its pronounced tendency to bleed-out. (It may be speculated that the adhesion promoter itself, due to its partly polar or hydrophilic nature enabling adhesion to polar plastics, is also the cause of the higher tendency of these grades to bleed-out.) Articles based on such LSR grades, with and without other thermoplastics (polyamide was used in the experiments described), were subjected to CO₂ extractions as outlined in the first example. The results are fully in line with those described above. In addition, only marginal delaminating, i.e. reduction of the adhesion between silicone and polyamide in two-component articles has been observed. In the selected cases where the silicone rubber was found to delaminate from polyamide, it was apparent that injection moulding had not been carried out properly. Therefore, CO₂ extraction may have the additional advantage of being used for selecting or screening the quality of the injection moulding or extrusion process, which is relevant in articles for medical use.

### Example 4

Articles with demanding geometries were extracted using a.m. parameters and process conditions. As an example, telephone keypads were chosen and analysed in detail for residues. It was found that the extraction process, if carried out for more than 10 minutes at 200 bars and 60°C, leads to a uniform extraction irrespective of substrate thickness and geometry. This is, of course, a precondition for the success of subsequent surface treatment.

2-K items, such as silicone/polyamide constructions show a less uniform extraction profiles. Larger surfaces of hard plastics apparently limit the extraction efficiency. However, oil reduction levels of at least 30% and typically 50% are found, the remaining oil being of high molecular weight nature and therefore posing less hazards for subsequent coating processes.

### Example 5

LSR in the form of sheets or films are suitable precursors for membranes, both for gas separation and for liquid/liquid and similar separation tasks. Extraction results are in line with those reported above. In addition, substrates with an artificially low vulcanisation level (i.e. < 95%) were extracted in order to increase the permeability of the membranes. It has been observed that the tendency for delamination or destruction of the articles subjected to extraction increases with a reduction of the vulcanisation level, however, sheets or films thinner than 1 mm are typically extractable without any visible damages.

### Example 6

LSR-IPN: Following a standard extraction process as above, a dye (rhodamine) was dissolved in CO₂ and passed into the reactor. Upon decompression, the dye precipitated in the extracted LSR items, leading to uniformly dispersed dye in LSR. The resulting colour is translucent. Similarly, low-molecular weight fractions of polyethylene, polypropylene, the respective glycols, prepolymers of diisocyanates and other thermoplastics were impregnated into the LSR structure using the same method. The resulting substrates can be described as interpenetrating networks (IPN's) of said thermoplastics in silicone, and they exhibit surface properties between the two pure components. IPN's are more facile to plasma-coat than pure silicone as evidenced by increased lifetime of the plasma coating. Similarly, a range of dyes can be incorporated into silicone rubber using the technology described. As a separate development, silicone based surfactants, i.e. containing a siloxane chain, a number of polymerised ethylene or propylene oxide units and finally an alkyl group (termination), have been impregnated into silicone rubber, both using solvents and supercritical carbon dioxide. The products are not IPN's, but do exhibit, however, very interesting properties with regard to increased hydrophilicity and ease of surface activation.

## Claims

1. A method of modifying the surface of a switch cap shaped polymeric substrate containing silicone rubber and comprising one or more silicon oil residues, said method comprising the steps of:
i) extracting at least a part of the silicon oil residues;
ii)subjecting said substrate to a plasma treatment; and
iii) coating the treated surface with a paint

2. A method according to claim 1 wherein step i) comprises a vacuum treatment of the substrate, said vacuum treatment preferably being carried out in a vacuum reactor until a constant pressure of 10 microbar (µbar) or less is reached.

3. A method according to claim 1 wherein step i) comprises a heat treatment of the substrate, said heat treatment being carried out for at least 0.3 hours at a temperature above 100°C and under air flow.

4. A method according to any one of the preceding claims wherein step i) comprises a vacuum treatment of the substrate, combined with a heat treatment of the substrate.

5. A method according to claim 3 wherein the plasma treatment being carried out within 24 hours after termination of the heat treatment extraction.

6. A method according to any one of the preceding claims wherein the amount of silicon oil residues removed during step i) is at least 0.1 % by weight of the substrate.

7. A method according to any one of the preceding claims wherein step i) includes removal of water.

8. A method according to any one of the preceding claims comprising the step of shaping the substrate by injection moulding, extruding or pressing prior to the extraction step.

9. A method according to any one of the preceding claims wherein the substrate is subjected to a coating process comprising one or more paint layers.

10. A silicone rubber switch cap rubber item obtainable using the method according to any one of the preceding claims.

11. A rubber item according to claim 10 wherein the treated surface being coated with a paint, the adherance of the paint to the surface being higher than the adhesion would have been if the extraction of sicone oil residues had been omitted.
